# EUROPÄISCHE PATENTANMELDUNG

(11) **EP 1 426 744 A1**
(43) Veröffentlichungstag der Anmeldung: **09.06.2004**
(21) Anmeldenummer: 03027623.2
(22) Anmeldetag: 02.12.2003
(51) Int. Cl.: G01J 1/06

(54) **Vorrichtung für die Ermittlung von Lichtintensität**

(30) Priorität: 03.12.2002 DE 10256645
(71) Anmelder: Hella KG Hueck & Co., 59552 Lippstadt (DE)
(72) Erfinder: Niemann, Thomas, 27753 Delmenhorst (DE); Henke, Thomas, 27616 Stubben (DE); Heilenkötter, Carsten, 28844 Weyhe (DE)

(57) **Zusammenfassung**

Die vorliegende Erfindung betrifft eine Sensorvorrichtung für die Ermittlung der Bestrahlungsstärke von Lichteinstrahlung in Abhängigkeit von der Einstrahlrichtung, insbesondere für die Ermittlung von Sonneneinstrahlung in ein Kraftfahrzeug, umfassend mindestens ein Richtcharakteristikmittel (4), durch das auf die Sensorvorrichtung auftreffendes Licht (5) in Abhängigkeit von der Richtung, aus der das Licht (5) auf die Sensorvorrichtung auftrifft, hindurchtreten kann, mindestens ein lichtempfindliches Sensorelement (3), das das durch das Richtcharakteristikmittel (4) hindurchgetretene Licht (6) detektieren kann, sowie mindestens ein Dämpfungsmittel, das das auf die Sensorvorrichtung auftreffende Licht (5) und/oder das durch das Richtcharakteristikmittel (4) hindurchgetretene Licht (6) derart dämpfen kann, dass die auf das lichtempfindliche Sensorelement (3) auftreffende Lichtleistung einen vorgegebenen Wert nicht übersteigt, wobei das Dämpfungsmittel als reflektierende Fläche (7) ausgebildet ist.

## Beschreibung

Die vorliegende Erfindung betrifft eine Sensorvorrichtung für die Ermittlung der Bestrahlungsstärke von Lichteinstrahlung in Abhängigkeit von der Einstrahlrichtung, insbesondere für die Ermittlung von Sonneneinstrahlung in ein Kraftfahrzeug, umfassend mindestens ein Richtcharakteristikmittel, durch das auf die Sensorvorrichtung auftreffendes Licht in Abhängigkeit von der Richtung, aus der das Licht auf die Sensorvorrichtung auftrifft, hindurchtreten kann, mindestens ein lichtempfindliches Sensorelement, das das durch das Richtcharakteristikmittel hindurchgetretene Licht detektieren kann, sowie mindestens ein Dämpfungsmittel, das das auf die Sensorvorrichtung auftreffende Licht und/oder das durch das Richtcharakteristikmittel hindurchgetretene Licht derart dämpfen kann, dass die auf das lichtempfindliche Sensorelement auftreffende Lichtleistung einen vorgegebenen Wert nicht übersteigt.

Eine Sensorvorrichtung der vorgenannten Art ist aus der europäischen Patentschrift EP 0 350 866 B1 bekannt. Die darin beschriebene Sensorvorrichtung dient insbesondere als Sonnensensor für ein Kraftfahrzeug, wobei der Sonnensensor beispielsweise eine Klimaautomatik mit unterschiedlich temperierbaren Klimazonen ansteuern soll. Es zeigt sich, dass bei Sonnenlicht Temperaturen subjektiv anders empfunden werden, so dass es sinnvoll ist, die Temperatur bei direkter Sonneneinstrahlung anders zu wählen, insbesondere etwas herunter zu regeln. Bei der in dem vorgenannten Patent beschriebenen Sensorvorrichtung ist das Richtcharakteristikmittel als Abdeckung eines Gehäuses ausgebildet, in dem das Sensorelement untergebracht ist. Die Abdeckung weist an unterschiedlichen Stellen eine unterschiedliche Dicke auf, so dass an unterschiedlichen Stellen, insbesondere abhängig vom Einfallswinkel des auf die Sensorvorrichtung auftreffenden Lichtes, unterschiedlich viel Licht in das Innere des Gehäuses transmittiert mit. Dieser winkelabhängige Effekt kann bei der Sensorvorrichtung gemäß dem Stand der Technik durch unterschiedliche Bedampfungen an unterschiedlichen Stellen der Abdeckung verstärkt werden. Weiterhin dient die Abdeckung auch als Dämpfungsmittel, wobei ein Dämpfungsmittel bei Sensorvorrichtungen der eingangs genanten Art insbesondere deshalb sinnvoll ist, weil das in der Regel sehr lichtempfindliche Sensorelement ab einer bestimmten einfallenden Lichtstärke ein übersteuertes Ausgangssignal aufweist.

Als nachteilig bei der Sensorvorrichtung gemäß dem vorgenannten Stand der Technik erweist sich, dass die Abdeckung eine Doppelfunktion ausübt, nämlich zum einen als Richtcharakteristikmittel und zum anderen als Dämpfungsmittel. Auf diese Weise kann die Abdeckung nicht wirklich flexibel an lokale Gegebenheiten angepasst werden bzw. nicht wirklich für beide Zwecke optimiert werden. Zum anderen soll eine Abdeckung in der Regel auch nach Designgesichtspunkten gestaltet werden, wobei dies bei der Sensorvorrichtung gemäß dem vorgenannten Stand der Technik aufgrund der Doppelfunktion der Abdeckung nur schwer möglich sein wird.

Das der vorliegenden Erfindung zugrunde liegende Problem ist die Schaffung einer Sensorvorrichtung der eingangs genannten Art, die flexibler einsetzbar ist.

Dies wird erfindungsgemäß dadurch erreicht, dass das Dämpfungsmittel als reflektierende Fläche ausgebildet ist. Durch die Ausbildung des Dämpfungsmittels als zusätzliche reflektierende Fläche werden Richtcharakteristikmittel und Dämpfungsmittel hinsichtlich Ihrer Ausgestaltung voneinander getrennt, so dass beide optimiert werden können.

Hierbei kann insbesondere vorgesehen sein, dass die reflektierende Fläche derart angeordnet ist, dass von der reflektierenden Fläche das durch das Richtcharakteristikmittel hindurchgetretene Licht reflektiert werden kann, wobei dieses reflektierte Licht zumindest teilweise von dem Sensorelement detektiert werden kann. Die reflektierende Fläche wird somit hinsichtlich des Strahlengangs des zu detektierenden Lichtes hinter das Richtcharakteristikmittel geschaltet, so dass nach Versehen des einfallenden Lichtes mit der gewünschten Richtcharakteristik das Licht derart gedämpft wird, dass das Sensorelement nicht mit einer zu großen Lichtleistung beaufschlagt wird.

Erfindungsgemäß kann dabei die reflektierende Fläche eine derartige Form und/oder eine derartige Rauhigkeit und/oder eine derartige Reflektivität aufweisen, dass dadurch die gewünschte Dämpfung des auf die reflektierende Fläche auftreffenden Lichtes erzielt wird. Da die Dämpfungsfunktion von der Richtcharakteristikfunktion getrennt ist, kann die reflektierende Fläche mit beliebigen geeigneten Maßnahmen derart gestaltet werden, dass die gewünschte Dämpfung bzw. die gewünschte Reflektivität erzielt wird.

Erfindungsgemäß kann vorgesehen sein, dass die Sensorvorrichtung ein Gehäuse und eine das Gehäuse zumindest teilweise abdeckende Abdeckung umfasst. In dem Gehäuse kann das Sensorelement untergebracht sein, wobei erfindungsgemäß die Abdeckung nach gestalterischen Gesichtspunkten ausgebildet sein kann.

Gemäß einer bevorzugten Ausführungsform der vorliegenden Erfindung ist das Richtcharakteristikmittel an oder in der Abdeckung ausgebildet. Weiterhin kann erfindungsgemäß die reflektierende Fläche auf der Innenseite des Gehäuses an einer Teilfläche des Gehäuses ausgebildet sein. Die Abdeckung und die reflektierende Fläche sind somit als voneinander separierte Teile ausgebildet und können getrennt voneinander optimiert und gestaltet werden.

Es kann insbesondere vorgesehen sein, dass das Richtcharakteristikmittel als an der Abdeckung angeformte Optik ausgebildet ist, durch die das auf die Sensorvorrichtung auftreffende Licht zumindest teilweise auf die reflektierende Fläche abgelenkt wird. Hierbei besteht beispielsweise die Möglichkeit, dass die angeformte Optik eine Wölbung und/oder eine Linse und/oder eine Fresnellinse umfasst. Die angeformte Optik kann dabei beispielsweise auf der Innenseite der Abdeckung angeordnet sein, so dass das äußere Design der Abdeckung unabhängig von der Optik ausgestaltet werden kann. Die Optik kann dabei so ausgebildet sein, dass durch die Optik die gewünschte winkelabhängige Richtcharakteristik erzielt wird.

Es besteht insbesondere die Möglichkeit, dass das Sensorelement ein infrarotempfindliches Sensorelement ist. Auf diese Weise kann die Abdeckung für sichtbares Licht undurchlässig gestaltet werden, so dass das unter Umständen vergleichsweise unattraktive Innenleben des Gehäuses für den Benutzer nicht einsehbar ist.

Alternativ besteht die Möglichkeit, dass das Sensorelement für den sichtbaren Bereich oder für den sichtbaren Bereich und für den infraroten Bereich empfindlich ist.

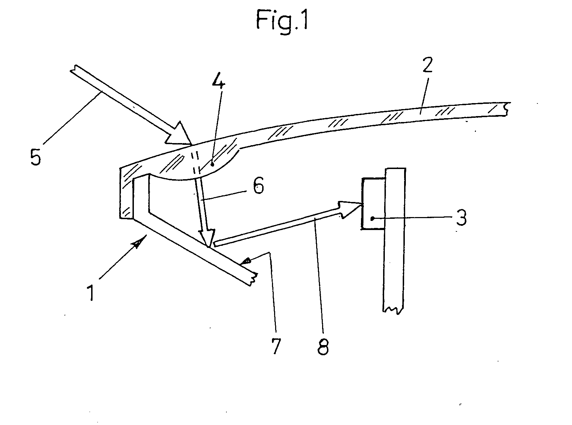

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Schnittansicht einer erfindungsgemäßen Sensorvorrichtung.

Die in Fig. 1 gebildete erfindungsgemäße Sensorvorrichtung umfasst ein Gehäuse 1, dass mit einer in Fig. 1 oberen Abdeckung 2 versehen ist. Weiterhin ist im Inneren des Gehäuses 1 ein lichtempfindliches Sensorelement 3 untergebracht.

Ein Teil der Abdeckung 2 ist als' Richtcharakteristikmittel 4 ausgebildet, durch das auf die Sensorvorrichtung auftreffendes Licht 5 zumindest teilweise in das Gehäuse 1 hindurchtreten kann. Die Strahlengänge des einfallenden Lichtes 5 und das durch das Richtcharakteristikmittel 4 hindurchgetretenen Lichtes 6 sind in Fig. 1 nur schematisch dargestellt. Das Richtcharakteristikmittel 4 kann derart geformt sein, dass je nach Richtung, aus der das Licht 5 auf das Richtcharakteristikmittel 4 auftrifft, mehr oder weniger Licht 6 durch das Richtcharakteristikmittel 4 hindurchtritt. Dies kann beispielsweise durch unterschiedlich stark absorbierende Bedampfung des Richtcharakteristikmittels 4 in einzelnen unterschiedlichen Richtungen realisiert werden. Es besteht auch die Möglichkeit, das Richtcharakteristikmittel 4 als Anformung an der Unterseite der Abdeckung 2 auszubilden, wie dies beispielhaft in Fig. 1 angedeutet ist. Durch eine derartige als Optik dienende Anformung können unter unterschiedlichen Winkeln auf das Richtcharakteristikmittel 4 auftreffende Teilstrahlen des Lichtes 5 unterschiedlich stark transmittiert bzw. unterschiedlich stark teilweise reflektiert werden, so dass sie je nach Winkel mehr oder weniger stark zu dem hindurchgetretenen Licht 6 beitragen. Die Anformung kann dabei als Wölbung, als Linse oder auch als Fresnellinse ausgebildet sein.

Die erfindungsgemäße Sensorvorrichtung umfasst weiterhin auf der Innenseite des Gehäuses 1 eine als Dämpfungsmittel ausgebildete reflektierende Fläche 7. Auf die reflektierende Fläche 7 trifft das durch das Richtcharakteristikmittel 4 hindurchgetretene Licht 6 auf und wird von dieser reflektierenden Fläche 7 in Richtung auf das Sensorelement 3 reflektiert. Es besteht erfindungsgemäß die Möglichkeit, dass durch gezielte Ausgestaltung der reflektierenden Fläche 7 vorgegeben werden kann, welcher Anteil des auf die reflektierende Fläche 7 auftretenden Lichts 6 in Form von reflektiertem Licht 8 auf das Sensorelement 3 auftrifft. Beispielsweise kann über die Form, die Rauhigkeit und die Reflektivität bzw. den Glanzgrad der reflektierenden Fläche 7 der Grad der Reflexion bzw. die Dämpfung des Lichtes 6 durch die reflektierende Fläche 7 eingestellt werden.

Bei dem Sensorelement 3 kann es sich um ein für Infrarotlicht empfindliches Sensorelement handeln. Demgemäß sollte das Richtcharakteristikmittel 4 für Infrarotlicht optimiert werden. Entsprechend sollte die reflektierende Fläche 7 hinsichtlich ihrer Reflektivität bzw. hinsichtlich ihrer Dämpfung für das Infrarotlicht ausgelegt sein, das von Sensorelement 3 bevorzugt detektiert werden kann.

Alternativ besteht die Möglichkeit, das Sensorelement 3 als für den sichtbaren Bereich oder für den sichtbaren Bereich und für den infraroten Bereich empfindliches Sensorelement auszulegen. Entsprechend können dann Richtcharakteristikmittel 4 und reflektierende Flächen 7 für beispielsweise Teile des sichtbaren Bereichs des Spektrums optimiert werden.

## Patentansprüche

1. Sensorvorrichtung für die Ermittlung der Bestrahlungsstärke von Lichteinstrahlung in Abhängigkeit von der Einstrahlrichtung, insbesondere für die Ermittlung von Sonneneinstrahlung in ein Kraftfahrzeug, umfassend
- mindestens ein Richtcharakteristikmittel (4), durch das auf die Sensorvorrichtung auftreffendes Licht (5) in Abhängigkeit von der Richtung, aus der das Licht (5) auf die Sensorvorrichtung auftrifft, hindurchtreten kann;
- mindestens ein lichtempfindliches Sensorelement (3), das das durch das Richtcharakteristikmittel (4) hindurchgetretene Licht (6) detektieren kann; sowie
- mindestens ein Dämpfungsmittel, das das auf die Sensorvorrichtung auftreffende Licht (5) und/oder das durch das Richtcharakteristikmittel (4) hindurchgetretene Licht (6) derart dämpfen kann, dass die auf das lichtempfindliche Sensorelement (3) auftreffende Lichtleistung einen vorgegebenen Wert nicht übersteigt,
**dadurch gekennzeichnet, dass** das Dämpfungsmittel als reflektierende Fläche (7) ausgebildet ist.

2. Sensorvorrichtung nach Anspruch 1, **dadurch gekennzeichnet, dass** die reflektierende Fläche (7) derart angeordnet ist, dass von der reflektierenden Fläche (7) das durch das Richtcharakteristikmittel (4) hindurchgetretene Licht (6) reflektiert werden kann, wobei dieses reflektierte Licht (8) zumindest teilweise von dem Sensorelement (3) detektiert werden kann.

3. Sensorvorrichtung nach einem der Ansprüche 1 oder 2, **dadurch gekennzeichnet, dass** die reflektierende Fläche (7) eine derartige Form und/oder eine derartige Rauhigkeit und/oder eine derartige Reflektivität aufweist, dass dadurch die gewünschte Dämpfung des auf die reflektierende Fläche (7) auftreffenden Lichtes erzielt wird.

4. Sensorvorrichtung nach einem der Ansprüche 1 bis 3, **dadurch gekennzeichnet, dass** die Sensorvorrichtung ein Gehäuse (1) und eine das Gehäuse (1) zumindest teilweise abdeckende Abdeckung (2) umfasst.

5. Sensorvorrichtung nach Anspruch 4, **dadurch gekennzeichnet, dass** das Richtcharakteristikmittel (4) an oder in der Abdeckung (2) ausgebildet ist.

6. Sensorvorrichtung nach einem der Ansprüche 4 oder 5, **dadurch gekennzeichnet, dass** die reflektierende Fläche (7) auf der Innenseite des Gehäuses (1) an einer Teilfläche des Gehäuses (1) ausgebildet ist.

7. Sensorvorrichtung nach einem der Ansprüche 5 oder 6, **dadurch gekennzeichnet, dass** das Richtcharakteristikmittel (4) als an der Abdeckung (2) angeformte Optik ausgebildet ist, durch die das auf die Sensorvorrichtung auftreffende Licht (5) zumindest teilweise auf die reflektierende Fläche abgelenkt wird.

8. Sensorvorrichtung nach Anspruch 7, **dadurch gekennzeichnet, dass** die angeformte Optik eine Wölbung und/oder eine Linse und/oder eine Fresnellinse umfasst.

9. Sensorvorrichtung nach einem der Ansprüche 1 bis 8, **dadurch gekennzeichnet, dass** das Sensorelement (3) ein infrarotempfindliches Sensorelement ist.

10. Sensorvorrichtung nach einem der Ansprüche 1 bis 8, **dadurch gekennzeichnet, dass** das Sensorelement (3) für den sichtbaren Bereich oder für den sichtbaren Bereich und für den infraroten Bereich empfindlich ist.
